# FASCICULE DE BREVET EUROPEEN

(11) **EP 1 932 410 B1**
(45) Date de publication et mention de la délivrance du brevet: **21.10.2009**
(21) Numéro de dépôt: 07291464.1
(22) Date de dépôt: 06.12.2007
(51) Int. Cl.: A01B 29/04

(54) **Appareil perfectionné pour le traitement du sol, notamment par émottage et compactage**
Verbesserter Apparat zur Bodenbearbeitung, insbesondere durch Brechen der Schollen und Kompaktieren
Improved device for treating the soil, in particular by clod-breaking and compacting

(30) Priorité: 12.12.2006 FR 0610844
(43) Date de publication de la demande: 18.06.2008
(73) Titulaire: ETABLISSEMENTS FRANQUET, 02190 Guignicourt (FR)
(72) Inventeur: Franquet, Benoist, 51100 Reims (FR); Bridoux, Jacky, 02190 Juvincourt (FR)
(74) Mandataire: Hammond, William

(56) Documents cités:
- DE-A1- 3 434 756
- FR-A1- 2 624 685
- FR-A1- 2 833 458
- US-A- 2 997 113

## Description

La présente invention concerne un appareil perfectionné pour le traitement du sol notamment par émottage et compactage.

Comme exemple d'appareil pour le traitement du sol, notamment par émottage et compactage, on citera celui décrit dans le document FR-2.624.685-A. Un tel appareil est constitué par un châssis porteur angulairement orientable par rapport à l'axe de traction de l'appareil et dans lequel sont montés rotatifs au moins deux éléments hélicoïdaux parallèles, dont l'un au moins roule sur le sol, lesdits éléments hélicoïdaux, de diamètre identique ou différent, ayant chacun un pas et un diamètre tels que, lors de leur rotation conjointe, les spires de l'un des éléments restent en contact étroit avec les spires de l'autre élément ou des autres éléments ; l'arbre de chacun des éléments hélicoïdaux est pourvu, à l'une de ses extrémités, d'un pignon denté sur lequel passe une chaîne sans fin, commune à deux éléments hélicoïdaux au moins, assurant ainsi une liaison desmodromique des éléments hélicoïdaux.

Ce type d'appareil est traditionnellement utilisé pour émotter et compacter un sol, donc pour travailler un sol déjà préparé. Mais actuellement, du fait des nouvelles techniques culturales, il est employé pour la préparation même du sol. Dans ces conditions, on observe des blocages de la rotation des spires par coincement, par exemple, d'une pierre entre le flanc de deux spires bloquant ainsi la rotation de celles-ci : il faut donc arrêter le travail pour extraire la pierre.

Ainsi, un des buts de la présente invention est-il de fournir un appareil du genre décrit ci-dessus qui permet d'éviter un arrêt lorsque des éléments durs, tels que des pierres, cailloux, mottes de terre durcies, bloquent la rotation des spires.

Ce but, ainsi que d'autres qui apparaîtront par la suite, est atteint par un appareil perfectionné pour le traitement du sol notamment par émottage et compactage du genre comprenant un châssis de forme et de structure connue, et muni à une extrémité de moyens d'attelage à un tracteur, comprenant notamment deux longerons parallèles entre eux et à l'axe longitudinal de ce châssis sous lequel est monté un ensemble de spires qui comprend au moins un couple de deux spires portées par des arbres rotatifs qui sont parallèles l'un à l'autre et dont les extrémités coopèrent avec des paliers disposés sur des flasques solidaires du longeron correspondant, lequel appareil est, selon la présente invention, caractérisé par le fait que chacun des flasques est constitué par une plaque en forme d'équerre, dont une extrémité, ou extrémité haute, coopère avec le châssis et l'autre extrémité, ou extrémité basse, comporte un des paliers, que deux flasques situés d'un même côté du châssis sont articulés l'un par rapport à l'autre au niveau de leur sommet autour d'un axe d'articulation muni d'un palier, et que cet appareil comporte un moyen pour détecter le blocage en rotation de l'un ou l'autre arbre des spires connecté à un moyen d'échappement pour écarter les extrémités basses des flasques et déplacer les extrémités hautes des flasques, ainsi que des moyens pour le déplacement des extrémités hautes sur le longeron correspondant.

Avantageusement, les moyens pour le déplacement des extrémités hautes sur le longeron correspondant sont constitués par trois orifices elliptiques disposés selon un triangle isocèle dont le sommet est constitué par l'un d'eux ayant son grand axe sensiblement perpendiculaire au sol et coopérant avec l'axe de rotation des flasques, les deux autres qui sont situés au-dessus de cet axe de rotation, ont leur grand axe sensiblement parallèle à l'axe du châssis et coopèrent chacun avec l'extrémité haute du flasque correspondant.

Selon un mode de réalisation préféré, le moyen pour détecter le blocage en rotation d'au moins une spire est disposé au niveau de l'arbre de la spire avant, et qu'il comporte un ressort de rappel disposé entre le palier de cet arbre et un disque mobile en translation sur l'arbre et solidaire en rotation avec la spire, ce disque coopérant avec le moyen pour détecter le blocage pour commander le moyen d'échappement.

La description qui va suivre et qui ne comporte aucun caractère limitatif doit être lue en regard des figures annexées, parmi lesquelles :

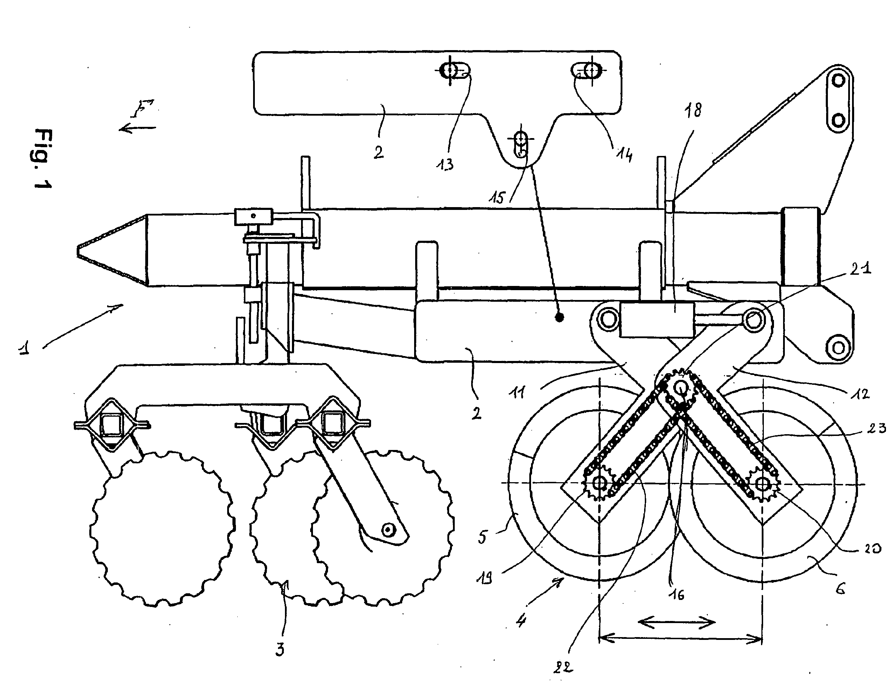

- la figure 1 est une vue de côté droit d'un appareil selon la présente invention ; et,
- la figure 2 est une vue partielle de dessus d'un appareil selon la figure 1.

Afin de donner un sens à des expressions tel que « avant », « arrière », l'appareil représenté sur les figures sera orienté par rapport à son sens d'avancement indiqué par la flèche F.

Ainsi qu'on peut le voir sur ces figures, un appareil perfectionné pour le traitement du sol notamment par émottage et compactage comprend un châssis désigné dans son ensemble par la référence 1 : il est de forme et de structure connue, et est muni à une extrémité de moyens d'attelage à un tracteur. Il comprend notamment deux longerons 2 situés dans un plan sensiblement parallèle au sol. Sous ce châssis 1, peuvent être montés différents outils de travail du sol tels que par exemple des disques 3, un ensemble de spires 4, comme représenté sur la figure unique.

Pour des raisons de clarté, il ne sera décrit qu'une face latérale de l'appareil, l'autre face latérale étant identique.

L'ensemble de spires 4 comprend, dans cet exemple de réalisation, deux spires, une spire avant 5 et une spire arrière 6, portées par des arbres avant 7 et arrière 8 respectivement qui sont montés rotatifs parallèlement l'un à l'autre et dont les extrémités coopèrent avec des paliers 9 et 10 disposées sur des flasques 11 et 12. Ces arbres 7 et 8 sont situés dans un plan sensiblement parallèle à celui des longerons 2 et disposés sensiblement perpendiculairement à ces longerons.

Chacun de ces flasques est constitué par une plaque en forme d'équerre, dont une extrémité, ou extrémité haute, coopère avec le châssis 1 et l'autre extrémité, ou extrémité basse, comporte un des paliers ci-dessus. Deux flasques situés d'un même côté du châssis 1 sont articulés l'un par rapport à l'autre au niveau de leur sommet autour d'un axe d'articulation 16 muni d'un palier 17.

Les extrémités de deux flasques situés d'un même côté du châssis 1 et coopérant avec lui, sont montées sur un des deux longerons 2 ou 2' qui chacun comporte trois orifices elliptiques : deux, 13 et 14, disposés parallèlement au sol et de grand axe longitudinal, le troisième, 15, constituant avec les deux autres les sommets d'un triangle isocèle ; ce troisième orifice elliptique 15 est situé sous la ligne définie par les deux précédents et est de grand axe perpendiculaire au sol, c'est à dire de grand axe vertical.

Les extrémités hautes des flasques disposés d'un même côté du châssis 1 sont reliées l'une à l'autre par un moyen d'échappement 18 hydraulique ou mécanique dont les extrémités coopèrent avec les orifices elliptiques 13 et 14 d'axe longitudinal. L'axe d'articulation 16 de chaque couple de flasques coopère avec l'orifice elliptique 15 d'axe vertical.

Sur chaque extrémité des arbres 7 et 8 des spires 4 et de l'axe d'articulation 16 sont montés des pignons 19, 20 et 21 respectivement: chaque pignon 19, 20 d'extrémité d'arbres 7 et 8 est relié au pignon 21 de l'axe d'articulation 16 par une chaîne, 22 et 23 respectivement.

Selon la présente invention, cet ensemble comprend aussi des moyens 24 pour détecter le blocage en rotation des arbres 7 et 8. Ces moyens 24 sont reliés au moyen d'échappement 18: si le blocage en rotation est détecté, cela entraîne le déploiement du moyen d'échappement 18 comme décrit ci-dessous.

En régime normal, les extrémités hautes des deux flasques 11 et 12 sont situées aux extrémités les plus éloignées l'une de l'autre des orifices elliptiques correspondants, et l'axe de rotation 16 de ces flasques est situé au sommet le plus bas de l'orifice elliptique 15 de grand axe vertical.

Si une pierre 19, ou tout autre élément résistant à l'action des spires, se bloque entre les deux spires 5 et 6, l'arrêt de la rotation de l'un ou l'autre axe 7 ou 8 est détecté par le moyen 24 pour détecter ce blocage : celui-ci commande un raccourcissement du moyen d'échappement 18, ce qui entraîne un rapprochement des deux extrémités hautes des flasques correspondantes qui se déplacent donc dans les orifices elliptiques correspondants entraînant par là même un écartement des extrémités basses de ces flasques : ceci entraîne un écartement des axes des spires et, de ce fait, un mouvement ascensionnel de l'axe d'articulation dans l'orifice elliptique correspondant et par suite la libération de la pierre 19.

Une fois la pierre 19 libérée, les deux spires 5 et 6 ont tendance à se rapprocher et donc à reprendre leurs positions initiales. Une fois la pierre 19 libérée, le moyen 24 pour détecter le blocage de la rotation d'au moins une des spires 5 et 6 n'est plus activé, entraînant ainsi un allongement du moyen d'échappement 18 : les deux spires 5 et 6 sont de nouveau actives.

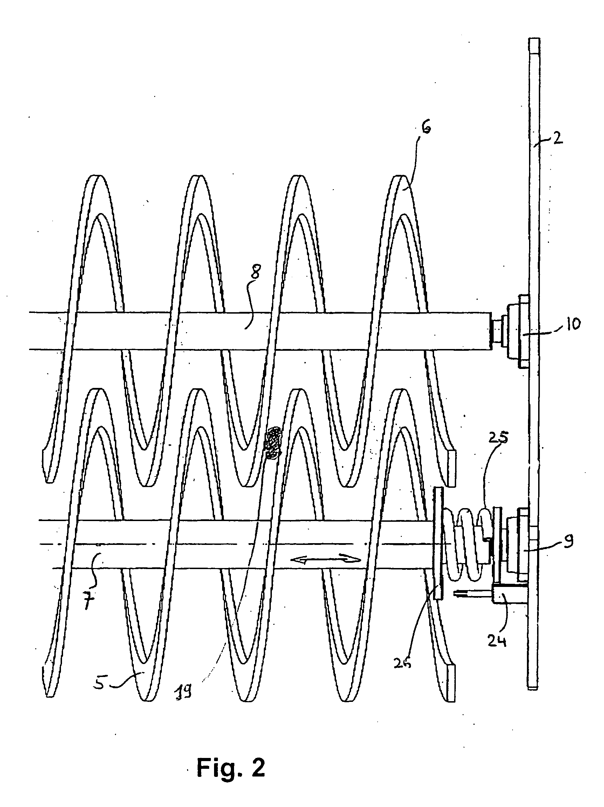

Selon un exemple de réalisation représenté à la figure 2, le moyen 24 pour détecter le blocage en rotation d'une des spires 5 et 6 est situé au niveau de l'arbre 7 de la spire avant 5. De plus autour de cet arbre est disposé un ressort de rappel 25 entre le palier 9 et un disque 26 mobile en translation sur cet arbre 7.

Lorsqu'une pierre 19 est coincée entre les deux spires 5 et 6, celles-ci ne sont plus en rotation. La spire arrière 6 pousse sur la spire avant 5 par l'intermédiaire de cette pierre 19 : la spire avant 5 pousse ainsi le disque 26 vers le palier 9. Le disque 26 est alors poussé vers le palier 9, ce qui, d'une part, entraîne une compression du ressort 25, et, d'autre part, le met en contact avec le moyen 24, déclenchant ainsi un raccourcissement du moyen d'échappement 18.

Une fois la pierre 19 libérée, la spire arrière 6 n'exerce plus de pression contre la spire avant 5, ce qui permet à celle-ci de reprendre sa position initiale sous l'effet de la décompression du ressort 25 : le disque 26 s'éloignant du moyen 24 n'exerce plus d'action sur ce dernier qui commande alors un allongement du moyen d'échappement 18.

## Revendications

1. Appareil pour le traitement du sol notamment par émottage et compactage du genre comprenant un châssis (1) de forme et de structure connue, et muni à une extrémité de moyens d'attelage à un tracteur, comprenant notamment deux longerons (2) parallèles entre eux et à l'axe longitudinal dudit châssis (1) sous lequel est monté un ensemble de spires (4) qui comprend au moins un couple de deux spires avant (5) et arrière (6) portées par des arbres (7 et 8 respectivement) rotatifs parallèlement l'un à l'autre et dont les extrémités coopèrent avec des paliers (9 et 10) disposés sur des flasques (11 et 12) solidaires du longeron correspondant, **caractérisé par le fait que** chacun desdits flasques est constitué par une plaque en forme d'équerre, dont une extrémité, ou extrémité haute, coopère avec ledit châssis (1) et l'autre extrémité, ou extrémité basse, comporte un desdits paliers, que deux flasques situés d'un même côté dudit châssis (1) sont articulés l'un par rapport à l'autre au niveau de leur sommet autour d'un axe d'articulation (16) muni d'un palier et que ledit appareil comporte un moyen (24) pour détecter le blocage en rotation de l'un ou l'autre arbre (7 ou 8) des spires (5, 6) connecté à un moyen d'échappement (18) pour écarter les extrémités basses desdits flasques et déplacer les extrémités hautes desdits flasques, ainsi que des moyens pour le déplacement desdites extrémités hautes sur le longeron correspondant.

2. Appareil selon la revendication 1, **caractérisé par le fait que** les moyens pour le déplacement desdites extrémités hautes sur le longeron (2) correspondant sont constitués par trois orifices elliptiques (13, 14 et 15) disposés selon un triangle isocèle dont le sommet est constitué par l'un d'eux (15) ayant son grand axe sensiblement perpendiculaire au sol et coopérant avec l'axe de rotation (16) des flasques (11, 12), les deux autres (14, 15) situés au-dessus dudit axe de rotation (16), de grand axe sensiblement parallèle à l'axe du châssis (1) et coopérant chacun avec l'extrémité haute du flasque correspondant.

3. Appareil selon l'une des revendications 1 ou 2, **caractérisé par le fait que** le moyen (24) pour détecter le blocage en rotation d'au moins une spire est disposé au niveau de l'arbre (7) de la spire avant (5), et qu'il comporte un ressort de rappel (25) disposé entre le palier (9) dudit arbre (7) et un disque (26) mobile en translation sur l'arbre (7) et solidaire en rotation avec la spire, ledit disque (26) coopérant avec le moyen (24) pour commander le moyen d'échappement (18).

## Claims

1. Apparatus for treating soil, especially by clod breaking and compaction of the type comprising a frame (1) of a known shape and structure and provided at one end with means for coupling to a tractor, comprising more especially two side members (2) which are parallel to one another and to the longitudinal axis of said frame (1) below which is mounted a set of spirals (4) which comprises at least one couple of two spirals, a front spiral (5) and a rear spiral (6), supported by rotating shafts (7 and 8 respectively) which are mutually parallel and the ends of which cooperate with bearings (9 and 10) arranged on flanges (11 and 12) integral with the corresponding side member, **characterised in that** each of said flanges comprises a plate in the form of an angle bracket, one end of which, or top end, cooperates with said frame (1) and the other end, or bottom end, comprises one of said bearings, **in that** two flanges situated on the same side of said frame (1) are articulated with respect to one another at their apex about a hinge pin (16) provided with a bearing, and **in that** said apparatus comprises a means (24) for detecting the blockage during rotation of one or other shaft (7 or 8) of the spirals (5, 6) which is connected to an escape means (18) for moving apart the bottom ends of said flanges and relocating the top ends of said flanges, as well as means for relocating said top ends on the corresponding side member.

2. Apparatus according to claim 1, **characterised in that** the means for relocating said top ends on the corresponding side member (2) consist of three elliptical openings (13, 14 and 15) arranged according to an isosceles triangle, the apex of which is formed by one (15) of them having its major axis substantially perpendicular to the soil and cooperating with the axis of rotation (16) of the flanges (11, 12), the other two (14, 15) which are situated above said axis of rotation (16) have their major axis substantially parallel to the axis of the frame (1) and each cooperate with the top end of the corresponding flange.

3. Apparatus according to either claim 1 or claim 2, **characterised in that** the means (24) for detecting the blockage during rotation of at least one spiral is arranged in the region of the shaft (7) of the front spiral (5) and **in that** it comprises a return spring (25) arranged between the bearing (9) of said shaft (7) and a disc (26) movable in translation on the shaft (7) and fixed in rotation with the spiral, said disc (26) cooperating with the means (24) for governing the escape means (18).

## Patentansprüche

1. Apparat zur Bodenbearbeitung, insbesondere durch Brechen der Schollen und Kompaktieren, von dem Typ, der einen Rahmen (1) von bekannter Form und Struktur umfasst, der an einem Ende mit Mitteln zum Ankuppeln an einen Traktor versehen ist und insbesondere zwei Längsträger (2) umfasst, die zueinander und zur Längsachse des Rahmens (1) parallel sind, unter dem eine Gruppe von Spiralen (4) montiert ist, die mindestens ein Paar aus zwei Spiralen, einer vorderen (5) und einer hinteren (6), umfasst, die durch Drehwellen (7 bzw. 8) gehalten werden, die parallel zueinander sind und deren Enden mit Lagern (9 und 10) zusammenarbeiten, die an Flanschen (11 und 12) angeordnet sind, die mit dem entsprechenden Längsträger verbunden sind, **dadurch gekennzeichnet, dass** jeder der Flansche durch eine winkelförmige Platte gebildet wird, deren eines Ende oder oberes Ende mit dem Rahmen (1) zusammenarbeitet und deren anderes Ende oder unteres Ende eines der Lager umfasst, dass zwei Flansche, die an der gleichen Seite des Rahmens (1) montiert sind, im Bereich ihrer Spitze aneinander angelenkt sind, und zwar um eine Gelenkachse (16), die mit einem Lager versehen ist, und dass der Apparat Folgendes umfasst: ein Mittel (24), um die Drehblockade der einen oder anderen Welle (7 oder 8) der Spiralen (5, 6) zu erkennen, das mit einem Ausstoßmittel (18) verbunden ist, um die unteren Enden der Flansche voneinander zu entfernen und die oberen Enden der Flansche zu bewegen, sowie Mittel zum Bewegen der oberen Enden am entsprechenden Längsträger.

2. Apparat nach Anspruch 1, **dadurch gekennzeichnet, dass** die Mittel zum Bewegen der oberen Enden am entsprechenden Längsträger (2) durch drei elliptische Öffnungen (13, 14 und 15) gebildet werden, die in einem gleichschenkeligen Dreieck angeordnet sind, dessen Spitze durch eine der Öffnungen (15) gebildet wird, deren große Achse im Wesentlichen senkrecht zum Boden ist und die mit der Drehachse (16) der Flansche (11, 12) zusammenarbeitet, wobei die beiden anderen (14, 15) über der Drehachse (16) angeordnet sind, eine im Wesentlichen parallel zur Achse des Rahmens (1) verlaufende große Achse aufweisen und jeweils mit dem oberen Ende des entsprechenden Flansches zusammenarbeiten.

3. Apparat nach einem der Ansprüche 1 oder 2, **dadurch gekennzeichnet, dass** das Mittel (24) zum Erkennen der Drehblockade mindestens einer Spirale im Bereich der Welle (7) der vorderen Spirale (5) angeordnet ist und dass es eine Rückstellfeder (25) umfasst, die zwischen dem Lager (9) der Welle (7) und einer Scheibe (26) angeordnet ist, die translationsbeweglich an der Welle (7) und drehfest mit der Spirale montiert ist, wobei die Scheibe (26) mit dem Mittel (24) zusammenarbeitet, um das Ausstoßmittel (18) zu betätigen.
